(19) **Europäisches Patentamt**
**European Patent Office**
**Office européen des brevets**

(11) **EP 1 760 827 B1**

(12) **EUROPEAN PATENT SPECIFICATION**

(45) Date of publication and mention
of the grant of the patent:
**18.11.2009 Bulletin 2009/47**

(51) Int Cl.:
*H01Q 1/36* (2006.01)　　*H01Q 1/24* (2006.01)
*H01Q 1/50* (2006.01)　　*H01Q 5/00* (2006.01)

(21) Application number: **06250230.7**

(22) Date of filing: **17.01.2006**

(54) **Mobile communication terminal having electrostatic discharge protection function**

Mobiles Kommunikationsgerät mit Schutzfunktion gegen elektrostatische Entladungen

Terminal de communication mobile avec une protection contre les décharges électrostatiques

(84) Designated Contracting States:
**DE FR GB**

(30) Priority: **01.09.2005 KR 2005081446**

(43) Date of publication of application:
**07.03.2007 Bulletin 2007/10**

(73) Proprietor: **Pantech & Curitel Communications Inc**
**Seoul (KR)**

(72) Inventors:
• **Park, Book-sung**
**Gangnam-gu**
**Seoul (KR)**

• **Kim, Eun-tae**
**Gwanak-gu**
**Seoul (KR)**

(74) Representative: **Mounteney, Simon James**
**Marks & Clerk LLP**
**90 Long Acre**
**London**
**WC2E 9RA (GB)**

(56) References cited:
**EP-A2- 0 367 225　　WO-A2-2004/045019**
**JP-A- 56 153 805　　JP-A- 2000 312 108**
**US-A- 5 280 646**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a mobile communication terminal having an electrostatic discharge (ESD) protection function and, more particularly, to an antenna embedded in the mobile communication terminal.

2. Description of Related Art

In general, a mobile communication terminal has employed a whip antenna or a stubby antenna. Recently, the mobile communication terminal is increasingly employing an embedded antenna, i.e., intenna, for the sake of miniaturization. Further, it may employ both external and embedded antennas.

Examples of the embedded antenna include a multi-band monopole antenna, which radiates uniformly in all directions when viewed from above, and a planar inverted F antenna (PIFA), which is a variation of the monopole antenna.

However, since the conventional antenna is mounted in a finished state on the mobile communication terminal, there is a limitation of space required for providing the antenna.

JP 56 15 3805A discloses a dual band antenna comprising two loop antennas and a dipole antenna, having a spark gap there between.

US-A-5 280 646 discloses a paging device comprising a loop antenna with spark gaps.

JP 2000 312108A and EP 0367225A disclose a window antenna for a motor vehicle serving both as an FM or AM radio antenna and as a hot wire, which is mounted on a motor window.

The present invention provides a terminal as defined in Claim 1.

The antenna can be deposited on a front or back case of the mobile communication terminal by a sputtering method. Accordingly, it is possible to overcome a limitation of space required for providing the antenna and to improve the performance of the antenna formed on the front or back case of the mobile communication terminal.

The discharge pattern line may include a triangular branch pattern disposed at a position facing an end portion of the main signal pattern line and/or the sub signal pattern line.

The main signal pattern line may include a plurality of square branch patterns at positions facing the discharge pattern line.

The discharge pattern line may further include triangular branch patterns at positions facing the square branch patterns formed on the main signal pattern line.

The discharge pattern line may further include a case grounding part that is connected to a front case or back case of the mobile communication terminal.

At least one of the main and sub signal pattern lines may further include a triangular branch pattern at its end portion.

The triangular branch pattern may be a tape antenna for tuning.

The feed point may be a screw hole for connection of a pogo pin for connecting the main and sub signal pattern lines to a PCB (printed circuit board).

The shorting point may be a screw hole for connection of a pogo pin for connecting the discharge pattern line to a grounding plane.

## BRIEF DESCRIPTION OF THE DRAWINGS

The above and other features and advantages of the present invention will become more apparent by describing in detail exemplary embodiments thereof with reference to the attached drawings in which:

FIG. 1 is a mobile communication terminal having an ESD protection function according to an embodiment of the present invention;
FIG. 2 is a flow chart of a method of forming an intenna embedded in a mobile communication terminal having an ESD protection function according to an embodiment of the present invention;
FIG. 3 is a table for showing skin depth based on the frequency of signal and the resistivity of intenna; and
FIGS. 4A to 4C are characteristic graphs of antennas.

## DETAILED DESCRIPTION OF THE INVENTION

Exemplary embodiments in accordance with the present invention will now be described in detail with reference to the accompanying drawings.

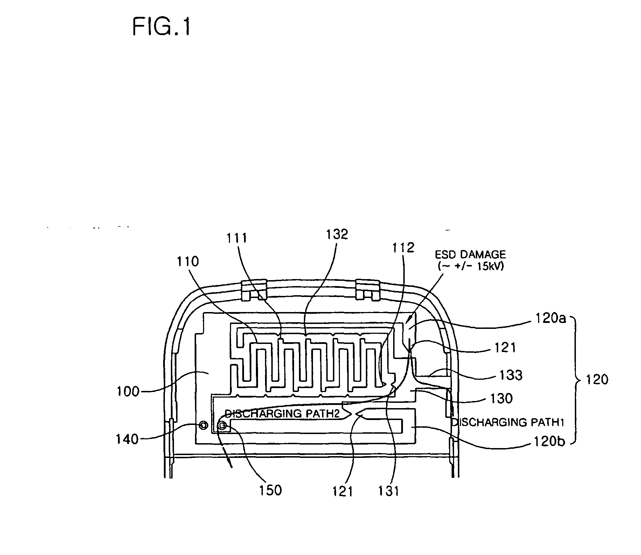

FIG. 1 is a mobile communication terminal having an electrostatic discharge (ESD) protection function according to an embodiment of the present invention. The mobile communication terminal includes a triple-band intenna.

The intenna 100 includes a main signal pattern line 110, a sub signal pattern line 120, a discharge pattern line 130, a feed point 140, and a shorting point 150.

The main signal pattern line 110 transmits/receives main frequency band signals, e.g., GSM-/DCS/PCS signals, and has a meander-line structure.

The sub signal pattern line 120 is formed unitarily with the main signal pattern line 110 and transmits/receives frequency band signals different from the main frequency band signals.

For example, the sub signal pattern line 120 includes a first sub signal pattern line part 120a for transmitting/receiving WCDMA signals and a second sub signal pattern line part 120b for transmitting/receiving GPS signals.

The discharge pattern line 130 is provided between the main and sub signal pattern lines 110 and 120 to form a spark gap therebetween, thereby performing an ESD protection function.

Electrostatic electricity means the surplus or insufficient static charges on the surface of an object, and it is a result that positive/negative charges lose balance within a local scope. Electrostatic electricity is formed through the transfer of electrons or ions. It is a kind of electrical energy staying on the surface. An electrostatic field is generated around the object which is charged with static electricity. The electrostatic field strength is proportional to the amount of static electricity stored in the object. However, when the electrostatic field strength reaches the dielectric breakdown strength of air (about 30kV/cm), the discharge occurs.

For example, when static electricity built up on an antenna reaches the dielectric breakdown strength of air and the discharge occurs, there is a probability that a transceiver or a baseband chip of a mobile communication terminal gets damaged.

According to the present invention, since the discharge pattern line 130 is provided between the main signal pattern line 110 and the sub signal pattern line 120 and the spark gap is formed therebetween so that the static electricity generated in the main signal pattern line 110 and the sub signal pattern line 120 can be discharged through the discharge pattern line 130, it is possible to improve the performance of the intenna embedded in the mobile communication terminal and to protect the mobile communication terminal from electrostatic discharge.

The feed point 140 is formed on the main signal pattern line 110 for power feeding.

That is, the feed point 140 is a connecting part for power feeding purpose. For example, the feed point 140 may be a screw hole for connection of a pogo pin for connecting the main and sub signal pattern lines 110 and 120 to a printed circuit board (PCB).

The shorting point 150 is formed on the discharge pattern line 130 to discharge the static electricity to a ground terminal.

That is, the shorting point 150, which is a connecting part for discharging purpose, discharges the static electricity, which is induced from the main and sub signal pattern lines 110 and 120 to the discharge pattern line 130, to the ground terminal.

The shorting point 150 may be a screw hole for connection of a pogo pin for connecting the discharge pattern line 130 to the ground terminal.

According to the present invention, since the static electricity generated in the main and sub signal pattern lines 110 and 120 of the intenna 100 embedded in the mobile communication terminal can be discharged through the discharge pattern line 130 before reaching the dielectric breakdown strength of air (about 30KV/cm), it is possible to improve the performance of the intenna embedded in the mobile communication terminal and to protect the mobile communication terminal from electrostatic discharge.

The discharge pattern line 130 may include a triangular branch pattern 131 disposed at a position facing an end portion of the main signal pattern line 110 and/or the sub signal pattern line 120.

That is, the triangular branch pattern 131 acts like a lightning rod, such that the static electricity formed on the main signal pattern line 110 and/or the sub signal pattern line 130 is discharged to the discharge pattern line 130 through the triangular branch pattern 131. Accordingly, it is possible to improve the performance of the intenna embedded in the mobile communication terminal and to protect the mobile communication terminal from electrostatic discharge.

The main signal pattern line 110 may include a plurality of square branch patterns 111 disposed at positions facing the discharge pattern line 130.

The discharge pattern line 130 may further include a plurality of triangular branch patterns 132 disposed at positions facing the square branch patterns 111 formed on the main signal pattern line 110.

Accordingly, the spark gaps between the square branch patterns 111 and the triangular branch patterns 132 are narrowed down, such that the static electricity is collectively discharged through the spark gap from the main signal pattern line 110 into the discharge pattern line 130.

The discharge pattern line 130 may further include a case grounding part 133, which is connected to a front case or a back case of the mobile communication terminal.

That is, the case grounding part 133 forms another path for discharging the static electricity formed on the main signal pattern line and/or the sub signal pattern line to the ground terminal.

Accordingly, since the static electricity collected from the main signal pattern line 110 and/or the sub signal pattern line 120 into the discharge pattern line 130 is discharged to the ground terminal through two paths, i.e., the shorting point 150 and the case grounding part 133, it is possible to improve the performance of the intenna embedded in the mobile communication terminal and to protect the mobile communication terminal from electrostatic discharge.

At least one of the main and sub signal pattern lines 110 and 120 may further include a triangular branch pattern 112, 121 at its end portion.

In this case, the triangular branch pattern 112, 121 may be a tape antenna for tuning purpose, which is formed of a thin film to provide better radiation performance.

Accordingly, it is possible to improve the performance of the intenna embedded in the mobile communication terminal, and to provide the mobile communication terminal having an ESD protection function.

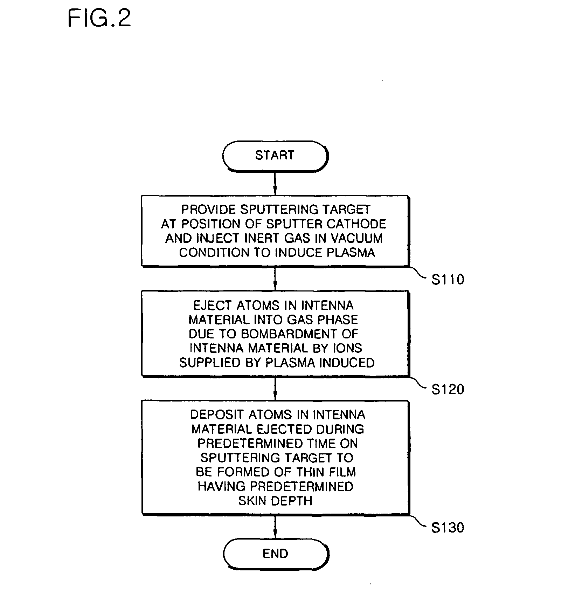

FIG. 2 is a flow chart of a method of forming the intenna embedded in the mobile communication terminal that has an ESD protection function.

The intenna embedded in the mobile communication terminal having an ESD protection function according to an embodiment of the present invention is formed through deposition performed on a front or back case of the mobile communication terminal by a sputtering method. Accordingly, it is possible to overcome a limitation in space required for providing the conventional intenna that is embedded in the mobile communication terminal.

The sputtering method is a physical process whereby atoms in a solid target material are ejected into the gas phase due to bombardment of the material by energetic ions. It is commonly used for thin-film deposition.

In operation S110, a sputtering target is provided at a position of a sputter cathode, and an inert gas is injected in a vacuum condition to induce a plasma.

The plasma is an ionized gas. "Ionized" in this case means that at least one electron has been removed from a significant fraction of the molecules. The free electric charges make the plasma electrically conductive so that it couples strongly to electromagnetic fields.

That is, in operation S110, the sputtering target, i.e., the front or back case of the mobile communication terminal, is provided at a position of the sputter cathode, and the inert gas is injected in a vacuum condition to induce a plasma.

In operation S120, atoms in an intenna material are ejected into the gas phase due to bombardment of the intenna material by the ions supplied by the plasma that is induced in the operation S110.

That is, in operation S120, the atoms in the intenna material, such as silver (Ag), stainless steel (SUS), or bronze, are ejected into the gas phase due to bombardment of the intenna material by the ions having positive charges which are supplied by the plasma induced in the operation S110.

In operation S130, the atoms in the intenna material which are ejected during a predetermined time in operation S120 are deposited on the sputtering target to be formed of a thin film having a predetermined skin depth. In this case, the deposited intenna preferably has a shape shown in FIG. 1, but may be formed in various shapes.

That is, in operation S130, the atoms in the intenna material which are ejected during a predetermined time in operation S120 are deposited on the sputtering target, i.e., the front or back case of the mobile communication terminal, to be formed of a thin film having a predetermined skin depth.

The term "skin depth" implies the effective depth of penetration of an electromagnetic wave in a conductive medium. The skin depth is the distance in which the wave decays to 1/e (about 37%) of its value. It can be expressed as:

**[Equation 1]**

$$\delta = \sqrt{\frac{2\rho}{2\pi f \mu_R \mu_0}}$$

$\delta$ :    skin depth
$\rho$ :    resistivity of intenna
f :    frequency of signal transmitted/received through intenna
$\mu_R$ :    relative permeability
$\mu_0$ :    conductivity

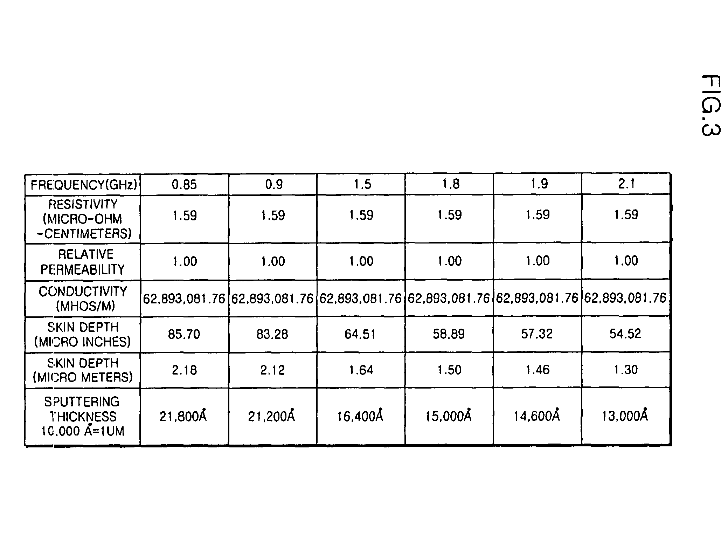

FIG. 3 is a table for showing the skin depth based on the frequency of signal and the resistivity of intenna. The intenna is deposited on a surface of the sputtering target to be formed of a thin film having a proper skin depth based on the characteristic of the intenna.

According to the method of forming the intenna by the sputtering method, a planar inverted F antenna (PIFA), which uses a ground line and a signal line upon power supplying, and a multi-band monopole antenna, which has no plane for grounding, can be deposited on an inner surface of the front or back case of the mobile communication terminal. Accordingly, it is possible to overcome a limitation in an inner space of the mobile communication terminal that is caused by mounting the conventional intenna in a finished state on the mobile communication terminal.

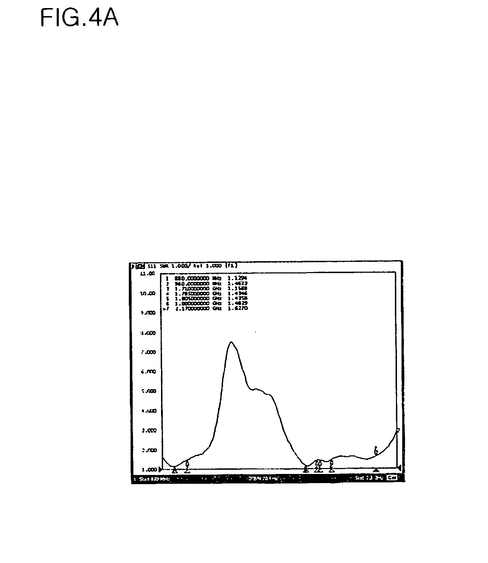

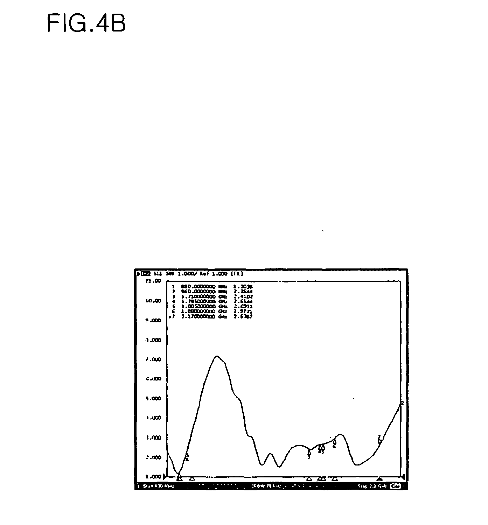

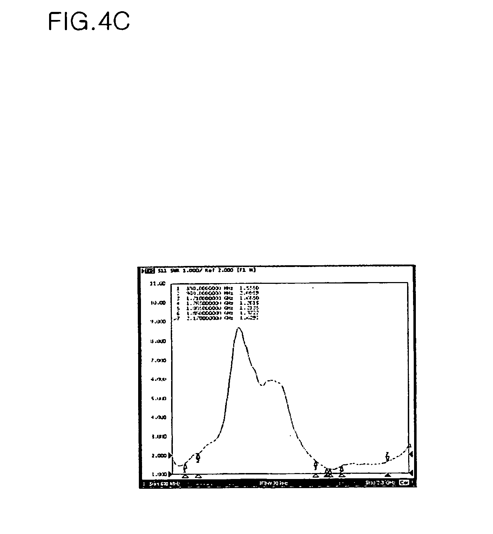

FIG. 4A is a characteristic graph of a conventional multi-band monopole intenna mounted in a finished state on a mobile communication terminal. FIG. 4B is a characteristic graph of the intenna according to the embodiment shown in FIG. 1. FIG. 4C is a characteristic graph of the intenna shown in FIG. 4B, in which the intenna is tuned.

In FIG. 4A, the standing wave ratio (SWR), which implies the ratio of maximum voltage (current) and minimum voltage (current), is 1.6:1 in GSM band, 1.6:1 in DCS band, 1.6:1 in PCS band, and 1.8:1 in WCDMA band. In FIG. 4B, the SWR is 2.5:1 in GSM band, 2.8:1 in DCS band, 3.0:1 in PCS band, and 2.8:1 in WCDMA band. However, in FIG. 4C, the SWR is 2.1:1 in GSM band, 2.0:1 in DCS band, 2.0:1 in PCS band, and 2.0:1 in WCDMA band. Accordingly, the intenna according to the present invention has a function similar to that of the conventional intenna and overcomes a limitation in space that is caused by mounting the conventional intenna in a finished state on the mobile communication terminal.

As apparent from the above description, the mobile communication terminal having an ESD protection function according to the present invention can be protected from ESD that occurs in the intenna formed on a front or back case of the mobile communication terminal. Accordingly, it is possible to improve the performance of the intenna embedded in the mobile communication terminal and to protect the mobile communication terminal from the ESD.

While the present invention has been described with reference to exemplary embodiments thereof, it will be understood by those skilled in the art that various changes in form and details may be made therein without departing from the scope of the present invention as defined by the following claims.

**Claims**

1. A mobile communication terminal having an electrostatic discharge, ESD, protection function that includes a multi-band antenna, wherein the antenna is embedded in the mobile communication terminal, comprising:

a main signal pattern line (110) configured to transmit/receive a main frequency band signal and which is formed in a meander-line shape; at least one sub signal pattern line (120) formed as one piece with the main signal line (110) and configured to transmit/receive a frequency band signal different from that of the main signal pattern line (110); a discharge pattern line (130) that is provided in a space between the main and sub signal pattern lines (110, 120) to form a spark gap to the main and/or the sub signal pattern line (110, 120) that is configured to perform an ESD protection function; a feed point (140) that is formed on the main signal pattern line (110) for power feeding; and a shorting point (150) that is formed on the discharge pattern line (130) to discharge static electricity to a ground terminal.

2. The mobile communication terminal of Claim 1, wherein the discharge pattern line includes a triangular branch pattern disposed at a position facing an end portion of the main signal pattern line and/or the sub signal pattern line.

3. The mobile communication terminal of claim 2, wherein the main signal pattern line includes a plurality of square branch patterns at positions facing the discharge pattern line.

4. The mobile communication terminal of claim 3, wherein the discharge pattern line further includes triangular branch patterns at positions facing the square branch patterns formed on the main signal pattern line.

5. The mobile communication terminal of claim 4, wherein the discharge pattern line further includes a case grounding part that is connected to a front case or back case of the mobile communication terminal.

6. The mobile communication terminal of any one of claims 1 to 5, wherein at least one of the main and sub signal pattern lines further includes a triangular branch pattern at its end portion.

7. The mobile communication terminal of claim 6, wherein the triangular branch pattern is a tape antenna for tuning.

8. The mobile communication terminal of any one of Claims 1 to 5, wherein the feed point is a screw hole for connection of a pogo pin for connecting the main and sub signal pattern lines to a PCB, printed circuit board.

9. The mobile communication terminal of any one of Claims 1 to 5, wherein the shorting point is a screw hole for connection of a pogo pin for connecting the discharge pattern line to a grounding plane.

**Patentansprüche**

1. Mobilkommunikationsendgerät mit einer ESD-Schutzfunktion (ESD = elektrostatische Entladung), die eine Mehrbandantenne enthält, worin die Antenne in das Mobilkommunikationsendgerät eingebettet ist, umfassend:

eine Hauptsignalmusterleitung (110), die dazu konfiguriert ist, ein Hauptfrequenzbandsignal zu übertragen/zu empfangen, und die in Gestalt einer Mäanderlinie geformt ist; mindestens eine Untersignalmusterleitung (120), die in einem Stück mit der Hauptsignalleitung (110) geformt ist und dazu konfiguriert ist, ein Frequenzbandsignal zu übertragen/zu empfangen, das von dem der Hauptsignalmusterleitung (110) verschieden ist; eine Entladungsmusterleitung (130), die in einem Zwischenraum zwischen den Haupt- und Untersignalmusterleitungen (110, 120) bereitgestellt ist, um zur Haupt- und/oder Untersignalmusterleitung (110, 120) eine Funkenstrecke zu bilden, die dazu konfiguriert ist, eine ESD-Schutzfunktion auszuüben; einen Einspeisepunkt (140), der auf der Hauptsignalmusterleitung (110) zum Stromeinspeisen geformt ist; und einen Kurzschlusspunkt (150), der auf der Entladungsmusterleitung (130) geformt ist, um statische Elektrizität über eine Erdklemme zu entladen.

2. Mobilkommunikationsendgerät nach Anspruch 1, worin die Entladungsmusterleitung ein dreieckiges Verzweigungsmuster enthält, das an einer Stelle angeordnet ist, die einem Endabschnitt der Hauptsignalmusterleitung und/oder der Untersignalmusterleitung gegenüberliegt.

3. Mobilkommunikationsendgerät nach Anspruch 2, worin die Hauptsignalmusterleitung eine Vielzahl von quadratischen Verzweigungsmustern an Stellen enthält, die der Entladungsmusterleitung gegenüberliegen.

4. Mobilkommunikationsendgerät nach Anspruch 3, worin die Entladungsmusterleitung außerdem dreieckige Verzweigungsmuster an Stellen enthält, die den auf der Hauptsignalmusterleitung geformten quadratischen Verzweigungsmustern gegenüberliegen.

5. Mobilkommunikationsendgerät nach Anspruch 4, worin die Entladungsmusterleitung außerdem ein Gehäuseerdungsteil enthält, das an ein Vordergehäuse oder Hintergehäuse des Mobilkommunikationsendgeräts angeschlossen ist.

6. Mobilkommunikationsendgerät nach einem der Ansprüche 1 bis 5, worin mindestens eine der Haupt- und Untersignalmusterleitungen außerdem ein dreieckiges Verzweigungsmuster an ihrem Endabschnitt enthält.

7. Mobilkommunikationsendgerät nach Anspruch 6, worin das dreieckige Verzweigungsmuster eine Bandantenne zum Einstellen ist.

8. Mobilkommunikationsendgerät nach einem der Ansprüche 1 bis 5, worin der Einspeisepunkt ein Schraubenloch zur Verbindung eines Pogo-Stifts ist, um die Haupt- und Untersignalmusterleitungen an eine Leiterplatte (PCB) anzuschließen.

9. Mobilkommunikationsendgerät nach einem der Ansprüche 1 bis 5, worin der Kurzschlusspunkt ein Schraubenloch zur Verbindung eines Pogo-Stifts ist, um die Entladungsmusterleitung an eine Erdungsplatte anzuschließen.

**Revendications**

1. Terminal de communication mobile ayant une fonction de protection contre les décharges électrostatiques, ESD, qui comprend une antenne multibande, dans lequel l'antenne est intégrée dans le terminal de communication mobile, comprenant :

une ligne de motif de signal principal (110) configurée pour émettre/recevoir un signal de bande de fréquence principal et qui est réalisée en forme de méandres ;
au moins une ligne de motif de signal secondaire (120) formée d'un seul tenant avec la ligne de signal principal (110) et configurée pour émettre/recevoir un signal de bande de fréquence différent de celui de la ligne de motif de signal principal (110) ;
une ligne de motif de décharge (130) qui est prévue dans un espace entre les lignes de motif de signaux principal et secondaire (110, 120) pour former un espace d'étincelle pour les lignes de motif de signaux principal et/ou secondaire (110, 120) qui est configuré pour exécuter une fonction de protection contre les décharges électrostatiques ;
un point de source (140) qui est formé sur la ligne de motif de signal principal (110) pour fournir de l'énergie ; et
un point de court-circuit (150) qui est formé sur la ligne de motif de décharge (130) pour décharger l'électricité statique vers une borne de masse.

2. Terminal de communication mobile selon la revendication 1, dans lequel la ligne de motif de décharge comprend un motif de branche triangulaire disposé à une position faisant face à une partie d'extrémité de la ligne de motif de signal principal et/ou de la ligne de motif de signal secondaire.

3. Terminal de communication mobile selon la revendication 2, dans lequel la ligne de motif de signal principal comprend une pluralité de motifs de branche carrés à des positions faisant face à la ligne de motif de décharge.

4. Terminal de communication mobile selon la revendication 3, dans lequel la ligne de motif de décharge comprend en outre des motifs de branche triangulaires à des positions faisant face aux motifs de branche carrés formés sur la ligne de motif de signal principal.

5. Terminal de communication mobile selon la revendication 4, dans lequel la ligne de motif de décharge comprend en outre une partie de mise à la masse de coque qui est connectée à une coque avant ou une coque arrière du terminal de communication mobile.

6. Terminal de communication mobile selon l'une quelconque des revendications 1 à 5, dans lequel au moins l'une des lignes de motif de signaux principal et secondaire comprend en outre un motif de branche triangulaire à sa partie d'extrémité.

7. Terminal de communication mobile selon la revendication 6, dans lequel le motif de branche triangulaire est une antenne ruban pour un accord.

8. Terminal de communication mobile selon l'une quelconque des revendications 1 à 5, dans lequel le point de source est un trou fileté pour connecter une broche pogo pour connecter les lignes de motif de signaux principal et secondaire à une carte de circuit imprimé, PCB.

9. Terminal de communication mobile selon l'une quelconque des revendications 1 à 5, dans lequel le point de court-circuit est un trou fileté pour connecter une broche pogo pour connecter la ligne de motif de décharge à un plan de masse.

FIG.1

FIG.2

```
                    ┌──────────────┐
                    │    START     │
                    └──────┬───────┘
                           │
        ┌──────────────────┴──────────────────┐
        │   PROVIDE SPUTTERING TARGET          │
        │   AT POSITION OF SPUTTER CATHODE     │
        │   AND INJECT INERT GAS IN VACUUM     │
        │   CONDITION TO INDUCE PLASMA         │
        └──────────────────┬──────────────────┘  ⟍ S110
                           │
        ┌──────────────────┴──────────────────┐
        │   EJECT ATOMS IN INTENNA             │
        │   MATERIAL INTO GAS PHASE            │
        │   DUE TO BOMBARDMENT OF              │
        │   INTENNA MATERIAL BY IONS           │
        │   SUPPLIED BY PLASMA INDUCED         │
        └──────────────────┬──────────────────┘  ⟍ S120
                           │
        ┌──────────────────┴──────────────────┐
        │   DEPOSIT ATOMS IN INTENNA           │
        │   MATERIAL EJECTED DURING            │
        │   PREDETERMINED TIME ON              │
        │   SPUTTERING TARGET TO               │
        │   BE FORMED OF THIN FILM             │
        │   HAVING PREDETERMINED               │
        │   SKIN DEPTH                         │
        └──────────────────┬──────────────────┘  ⟍ S130
                           │
                    ┌──────┴───────┐
                    │     END      │
                    └──────────────┘
```

9

## FIG.3

| FREQUENCY(GHz) | 0.85 | 0.9 | 1.5 | 1.8 | 1.9 | 2.1 |
|---|---|---|---|---|---|---|
| RESISTIVITY (MICRO-OHM-CENTIMETERS) | 1.59 | 1.59 | 1.59 | 1.59 | 1.59 | 1.59 |
| RELATIVE PERMEABILITY | 1.00 | 1.00 | 1.00 | 1.00 | 1.00 | 1.00 |
| CONDUCTIVITY (MHOS/M) | 62,893,081.76 | 62,893,081.76 | 62,893,081.76 | 62,893,081.76 | 62,893,081.76 | 62,893,081.76 |
| SKIN DEPTH (MICRO INCHES) | 85.70 | 83.28 | 64.51 | 58.89 | 57.32 | 54.52 |
| SKIN DEPTH (MICRO METERS) | 2.18 | 2.12 | 1.64 | 1.50 | 1.46 | 1.30 |
| SPUTTERING THICKNESS 10.000 Å=1UM | 21,800Å | 21,200Å | 16,400Å | 15,000Å | 14,600Å | 13,000Å |

FIG.4A

FIG.4B

FIG.4C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 56153805 A
- US 5280646 A
- JP 2000312108 A
- EP 0367225 A